# EUROPEAN PATENT APPLICATION

(11) **EP 4 730 267 A1**
(43) Date of publication of application: **22.04.2026**
(21) Application number: 24306697.4
(22) Date of filing: 16.10.2024
(51) Int. Cl.: G06T 13/40

(54) **VOLUMETRIC REPRESENTATION OF THE HAIRSTYLE MODEL OF AN AVATAR**

(71) Applicant: InterDigital CE Patent Holdings, SAS, 75017 Paris (FR)
(72) Inventor: LE CLERC, Francois, 35590 L'HERMITAGE (FR); GOSSELIN, Philippe Henri, 35235 THORIGNE-FOUILLARD (FR); COVA REGATEIRO, João Pedro, 35220 CHATEAUBOURG (FR); AVRIL, Quentin, 35830 BETTON (FR)
(74) Representative: Vossius & Partner Patentanwälte Rechtsanwälte mbB

(57) **Abstract**

Some embodiments of a method may include: obtaining a hairstyle description corresponding to a hairstyle model, wherein the hairstyle description comprises three-dimensional (3D) orientation information and occupancy information; building a 3D array of grid cells using grid size and cell counts; filling the 3D array of grid cells with orientation and occupancy data; obtaining a target avatar head mesh registered to the hairstyle model and a hair growth region; and performing a hair growth process for each candidate strand of a full hairstyle.

## Description

### INCORPORATION BY REFERENCE

The present application incorporates by reference in their entirety the following application European Patent Application Serial No. 24305094, entitled "AVATAR JSON INTERCHANGE FILE FORMAT" and filed January 15, 2024 ("'094 application").

### BACKGROUND

The present application is related to avatars in 3D virtual environments.

### SUMMARY

An example method in accordance with some embodiments may include: obtaining a hairstyle description corresponding to a hairstyle model, wherein the hairstyle description includes three-dimensional (3D) orientation information and occupancy information; building a 3D array of grid cells using grid size and cell counts; filling the 3D array of grid cells with orientation and occupancy data; obtaining a target avatar head mesh registered to the hairstyle model and a hair growth region; and performing a hair growth process for each candidate strand of a full hairstyle.

For some embodiments of the example method, the hair growth process includes: sampling a strand root on the hair growth region of the target avatar head mesh; and growing the respective candidate strand based on the 3D orientation information and the occupancy information in the hairstyle description.

For some embodiments of the example method, growing the respective candidate strand is based on the 3D orientation information and the occupancy information corresponding to a first grid cell.

For some embodiments of the example method, growing the respective candidate strand includes: determining that the respective candidate strand has reached a border of the first grid cell and a second grid cell; and growing the respective candidate strand based on the 3D orientation information and the occupancy information of the second grid cell.

For some embodiments of the example method, wherein the occupancy information corresponding to the respective candidate strand indicates that a corresponding grid cell is unoccupied, and wherein the hair growth process further includes stopping growth of the respective candidate strand.

For some embodiments of the example method, filling the 3D array of grid cells with orientation and occupancy data is based on the 3D orientation information and occupancy information in the hairstyle description.

For some embodiments of the example method, filling the 3D array of grid cells with orientation and occupancy data includes: assigning a 3D orientation value to at least one cell in the 3D array of grid cells. assigning an occupancy Boolean value to at least one cell of the 3D array of grid cells; and

For some embodiments of the example method, assigning the 3D orientation vector to at least one cell in the 3D array of grid cells includes: obtaining a 1-dimensional (1D) array of hair orientation vectors from the hairstyle description; obtaining an isSparse property value from the hairstyle description; unflattening the 1D array of hair orientation vectors; and assigning a 3D orientation value to at least one cell in the 3D array of cells based on the unflattened 1D array of hair orientation vectors and the isSparse property.

For some embodiments of the example method, the 3D orientation value corresponds to a 3D orientation vector.

For some embodiments of the example method, assigning the occupancy Boolean value to at least one cell of the 3D array of grid cells includes: obtaining a 1-dimensional (1D) array of Boolean occupancy values from the hairstyle description; unflattening the 1D array of Boolean occupancy values; and assigning an occupancy Boolean value to at least one cell in the 3D array of cells according to the unflattened 1D array of Boolean occupancy values.

For some embodiments of the example method, the target avatar head mesh includes an indication of the hair growth region.

For some embodiments of the example method, the target avatar head mesh includes an indication of whether hair strands may be grown from a portion of the hair growth region.

For some embodiments of the example method, the hairstyle description is compatible with an Avatar Json Interchange Format (AJIF)-based format.

For some embodiments of the example method, the hairstyle description is compatible with a Graphics Library Transmission Format (gITF)-based format.

An example apparatus in accordance with some embodiments may include: a processor; and a non-transitory computer-readable medium storing instructions operative, when executed by the processor, to cause the apparatus to perform the method of any of the methods listed above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a schematic illustration showing example topologies of the reference avatar mesh models for the MPEG-I Scene Description standard, for various levels of detail according to some embodiments.
FIG. 3 is a schematic illustration showing an example guide curve hairstyle model attached to an avatar head mesh according to some embodiments.
FIG. 4 is a schematic illustration showing an example 3D orientation field according to some embodiments.
FIG. 5 is a schematic illustration showing an example 3D occupancy field according to some embodiments.
FIG. 6 is a flowchart illustrating an example process for parsing the "volumetricHairstyle" property according to some embodiments.
FIG. 7 is a flowchart illustrating an example process for synthesizing a full strand hairstyle from a volumetric hairstyle according to some embodiments.
FIG. 8 is a flowchart illustrating an example process for growing a hairstyle according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseam* in the detailed description.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

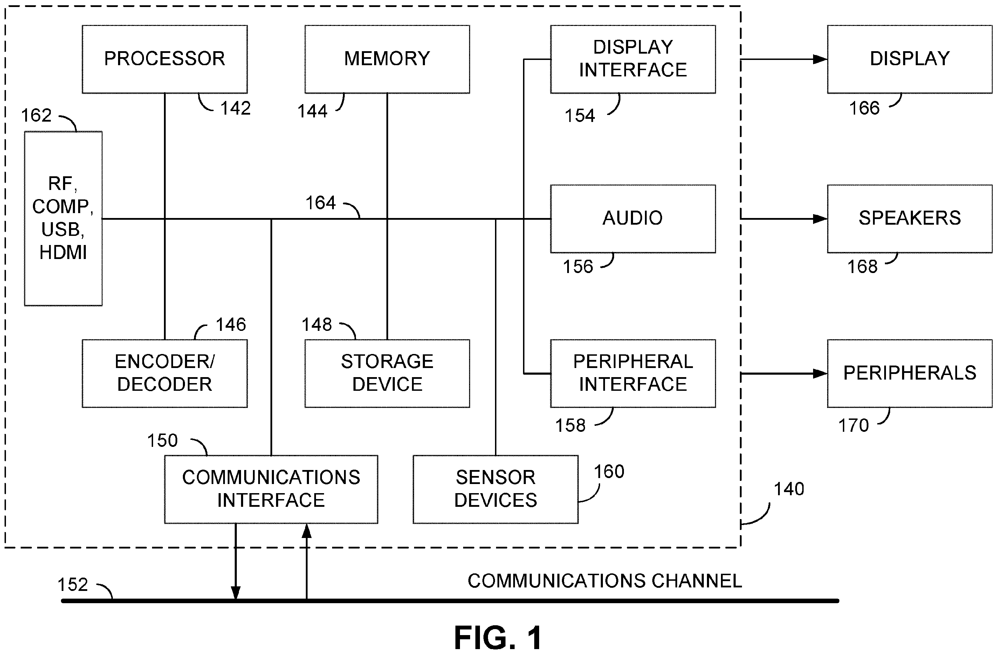

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

### Avatars

The domain of the application is the representation of avatars in 3D virtual environments. Such representations are used, for instance, in "metaverse" frameworks, where avatars act as proxy representations for users. Such representations allow users to interact with other users represented by their own avatar and with real world elements through virtual representations of these elements.

For illustration purposes, an avatar may be used in a metaverse framework. An e-commerce website may be represented inside a metaverse 3D virtual environment by a virtual shop in a virtual shopping street. An avatar may be directed by the user it represents, for instance by means of a game console or by pressing keys on a computer keyboard, to walk along a virtual shopping street in a virtual environment and enter a virtual shop. The virtual shop is a computer-generated representation of a store owned by some retail company. The display on the user's computer screen is updated live to reflect the position and viewpoint of the avatar in the virtual environment. If the avatar enters the virtual shop, the user is shown the virtual representation of the shop. A user may navigate his or her avatar through the aisles of the virtual shop and select goods that the user wants to buy. These goods are virtual representations of real goods that are sold in brick-and-mortar shops owned by the retail company. When the avatar exits the virtual shop, the user is asked to pay for the goods that the user has selected in the virtual shop. The payment proceeds in the real world, for instance by means of the user's credit card. When the payment is acknowledged, the physical goods are delivered to the user's home by the retail company. In this scenario, navigating in the 3D immersive environment through an avatar to buy goods may be seen as an immersive alternative to browsing an e-commerce website.

### Avatar Representation

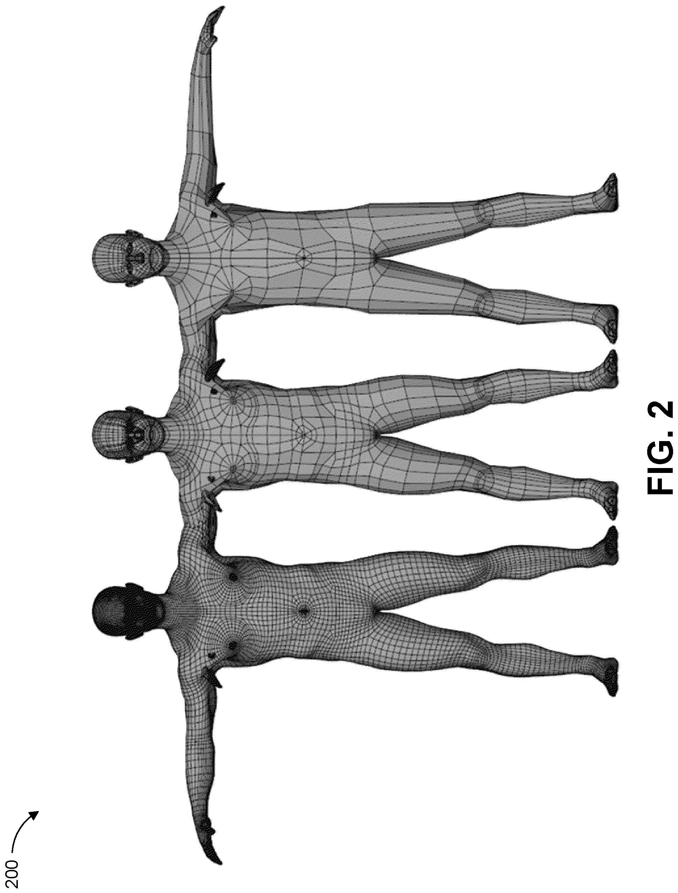

FIG. 2 is a schematic illustration showing example topologies of the reference avatar mesh models for the MPEG-I Scene Description standard, for various levels of detail according to some embodiments. The set of avatar mesh geometries 200 show high (left avatar), medium (middle avatar), and low (right avatar) levels of detail. This illustration is copied from the draft text of ISO/IEC 23090-14, enriches glTF with extra features, including timed media. Amendment 2 of MPEG-I SD, described in ISO/IEC 23090-14 CDAM2 document: "Support for Haptics, Augmented Reality, Avatars, Interactivity, MPEG-I Audio, and Lighting".

An avatar in a 3D virtual environment is often represented as a 3D textured mesh. Example avatar mesh geometries 200 are shown in FIG. 2. The mesh is defined by a set of 3D vertices connected by edges. The vertices and edges form polygonal faces make up the surface of the mesh. Often, the polygonal faces are triangles.

The polygonal faces of the mesh define a geometrical model of the human character that the mesh represents. The count of vertices on the mesh and their locations on the human body, with respect to semantic salient points such as mouth corners or elbow tips, defines the topology of the mesh. In other words, the topology defines how the surface of the mesh is sampled. For instance, a mesh topology for an avatar may impose that the contours of its lips be sampled using a fixed number of vertices positioned at regularly spaced intervals along the contour, with vertices located at the lip corners.

For a given topology, the positions in 3D space of the mesh vertices define the shape of the mesh, which reflects the morphology of the character. To illustrate the difference between topology and morphology, consider several meshes of approximately the same scale and size representing the bodies of several characters. All of these meshes are assumed to share the same topology. This topology may impose that all of these meshes have two vertices positioned at the two corners of the lips. However, the relative 3D positions of these two vertices may differ across characters to reflect morphological differences in the widths of their mouths.

### Hair Models

The body of a human character has a smooth surface that may be well modeled by a polygonal mesh. However, meshes may not be appropriate for modeling hair, which consists of a set of thin intertwined strands that do not form a smooth surface. A mesh geometry may be used to model the outer surface of hair and the associated texture to represent the strands, but such a model may be acceptable only for low-fidelity avatar rendering.

A high degree of realism in hairstyle rendering may be achieved by modeling the hairstyle as a collection of strands. Each strand is modeled as a 3D curve anchored on the surface of the avatar head mesh. The computing capabilities of modern graphics hardware allows such full strand models consisting of tens of thousands of strands to be animated and rendered in real time on game engines. However, the large memory footprint of these models incurs high bandwidth requirements that may be problematic when transmitting avatar models in client-server architectures such as the ones used in metaverse frameworks, when the network has a limited capacity.

To limit the volume of data, strand-based hairstyle models may be restricted to smaller sets of strands called "guide curves". A guide curve will often represent the geometry of a reference strand of a wisp after which the other strands in the wisp are modeled. If a hairstyle model of an avatar is transmitted as a guide curve model, the application at the receiving end needs to reconstruct the model as a full strand model from the guide curves. Such a reconstructed model is used to render the hair of the avatar. This reconstruction involves the interpolation on the surface of the avatar head mesh of the full hairstyle strand curves in-between guide curves, for all the wisps. In this process, the shape of the interpolated strand curves is conditioned by the nearest guide curves.

### Avatar and Hairstyle Descriptions in the MPEG-I Scene Description Standard

The specification *Khronos gITF Specification for the Efficient Transmission and Loading* of 3D *Scenes and Models by Engines and Applications,* KHRONOS, Version 2.0, *available at:* khronos<dot>org/gltf provides specifications for standardizing the representation of the geometry, texture, and animation of an avatar.

The MPEG-I Scene Description (SD) standard, currently described in the draft text of ISO/IEC 23090-14, enriches glTF with extra features, including timed media. Amendment 2 of MPEG-I SD, described in ISO/IEC 23090-14 CDAM2 document: "Support for Haptics, Augmented Reality, Avatars, Interactivity, MPEG-I Audio, and Lighting", defines a specialization of a glTF node for avatars through its "MPEG_node_avatar" extension. This extension adds avatar-specific semantic descriptive elements to the attributes provided by glTF for describing the geometry, texture, and animation of digital human characters.

Amendment 2 of the MPEG-I SD standard is understood to not standardize any descriptor for the hairstyle of an avatar. However, the strand-based hairstyle models presented below may be described using a glTF mesh object organized as a collection of polyline primitives, each polyline representing a strand or a guide curve. A polyline primitive of a glTF mesh is described as an ordered list of control vertices. Attributes may be attached to such an ordered list. These attributes may describe the 3D positions of the control vertices, their colors, or their 2D coordinates in a UV texture map. The control vertices of these polylines may be used by extension to represent control points of parametric curves such as Beziers, splines, or nonuniform rational B-splines (NURBS) curves. If this situation is the case, the position of a given point on a curve may be expressed as a linear combination of the positions of at least two control vertices describing the curve within a mesh primitive, with given linear combination weights.

### A Problem to be Solved

In a metaverse framework, the descriptions of 3D environments, which may involve avatars, are communicated (or transmitted) between client and server devices. For instance, in such frameworks, a server device may manage the description of a virtual 3D environment and of avatars navigating in this environment under the control of their users. In this setting, each user device periodically sends an update of its avatar position, posture, and appearance to the server device. The server device updates the description of the scene representing the 3D virtual environment accordingly to reflect the new positions and postures of all avatars. The server device transmits this description to all user devices so that they may render the updated scene.

In this context, it may be desirable to save bandwidth and reduce the volume of the data used to represent the virtual world scene, particularly the avatars involved in the scene description. The full strand-based hairstyle model of an avatar may include 100,000 or more 3D curves. As a result, such models may incur bandwidth requirements that some networks may be unable to meet.

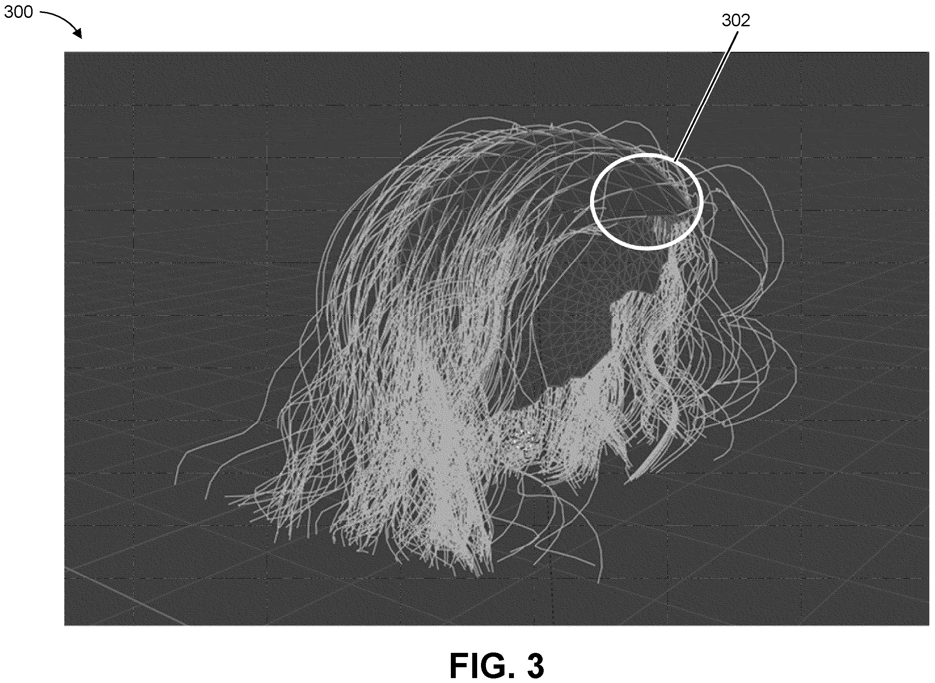

FIG. 3 is a schematic illustration showing an example guide curve hairstyle model attached to an avatar head mesh according to some embodiments. The sparsity of guide curves in the area delimited by the circle 302 of the hairstyle model 300 and the difference in their growing directions on either side of the hair parting line makes the interpolation of strands from guide curves in this region difficult.

Guide curve representations of avatar hairstyles provide a lightweight alternative to full strand-based models (which consist of tens of thousands of curves), but guide curve representations may give rise to other issues. Because guide curves are sparsely sampled on the surface of the avatar head, reconstructing the correct strand shapes of the full hairstyle model from nearby guide curves at some locations on the scalp may be difficult. This problem is illustrated in FIG. 3, which represents a guide-curve hairstyle model bound to the mesh of an avatar head. In the region of the mesh delimited by the circle 302, the guide curves are few and grow in different directions. As a result, an automated strand interpolation algorithm has difficulty determining the shapes of the strands to be grown in this region from the shapes of the nearby guide curves.

The application discusses a representation of hairstyle models based on regularly sampled 3D volumetric orientation and occupancy fields. This representation is lightweight and does not suffer from the above-mentioned limitations of guide curve representations.

Volumetric representations of hairstyles have been proposed in the scientific literature, e.g., in the paper Saito, Shunsuke, et al., *3D Hair Synthesis Using Volumetric Variational Autoencoders*, 6:37 ACM TRANSACTIONS ON GRAPHICS 1-12 (2018) ("*Saito*"). The rationale for such representations in *Saito et al*'s paper is to specify the hairstyle model as a regularly sampled data structure defined on a Euclidean space, so that the hairstyle model may be processed in a straightforward way by a convolutional neural network. Specifically, the volumetric representation of a hairstyle consists of a 3D orientation field and a 3D occupancy field. Both fields are defined on a 3D grid that partitions a 3D bounding box of the hairstyle volume into 3D cells of equal size along the 3 space dimensions.

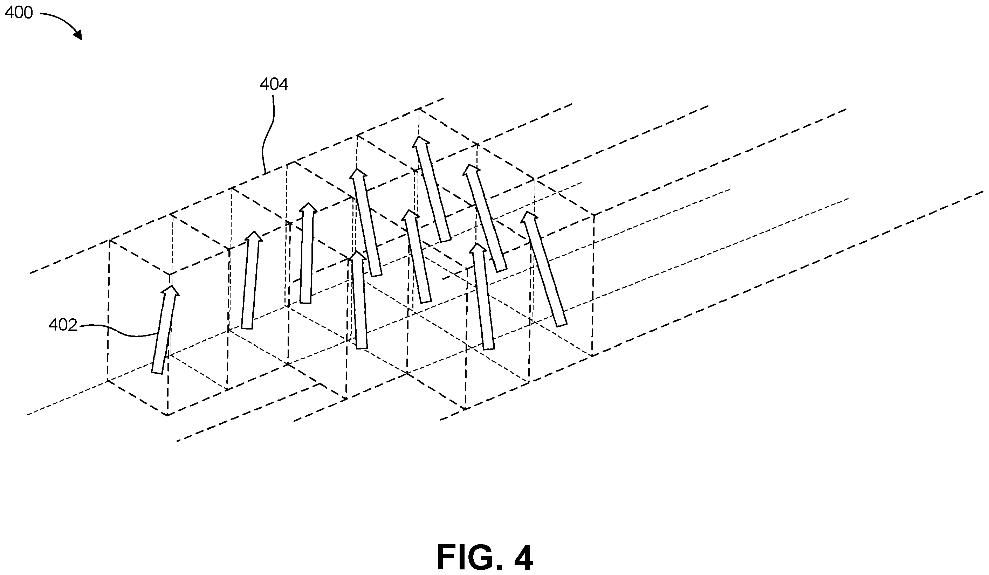

FIG. 4 is a schematic illustration showing an example 3D orientation field according to some embodiments. A 3D orientation field 400 is shown on FIG. 4, where each cell 404 is represented as a 3D box with dotted line boundaries. Each cell 402 holds orientation information displayed as an arrow 402 and specified as a 3D unit vector. Together, the orientation vectors for all the cells form the 3D orientation field. Each arrow 402 represents a unit vector defining the hairstyle orientation in its cell 404.

For clarity, only a single vertical layer of a small number of cells is represented on FIG. 4. However, in general, a 3D orientation field consists of a 3D array of *N_{X} x N_{Y} x N_{Z}* cells, where *N_{X}, N_{Y},* and *N_{Z}* represent the number of cells along the X, Y and Z dimensions of 3D space. The values of *N_{X}, N_{Y},* and *N_{Z}* may be larger than 1.

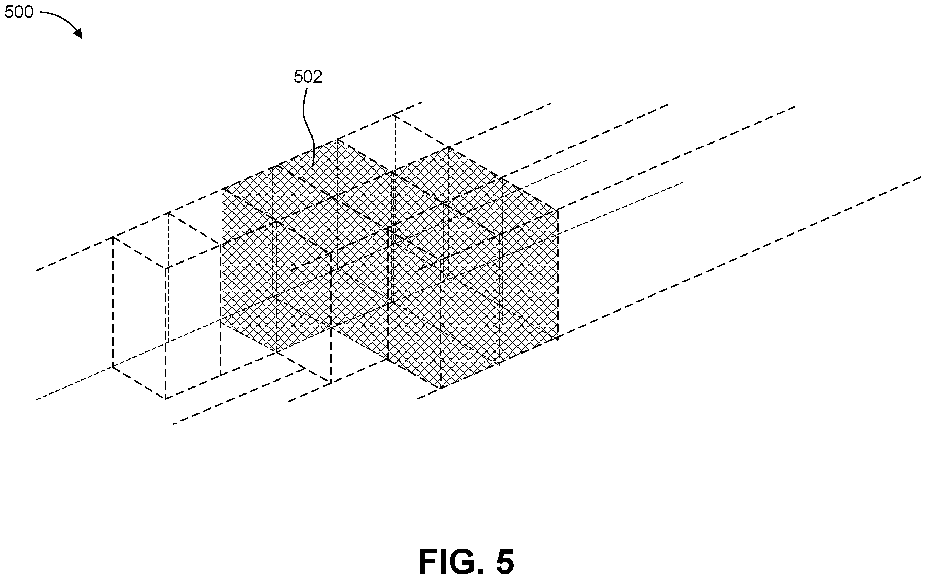

FIG. 5 is a schematic illustration showing an example 3D occupancy field according to some embodiments. FIG. 5 shows a 3D occupancy field 500 attached to the 3D orientation field of FIG. 4. The 3D occupancy field specifies which cells 502 in the bounding box of the hairstyle contain hair, i.e., which cells 502 have a non-empty intersection with the hairstyle volume. In the example of FIG. 5, occupied cells containing parts of the hairstyle are greyed, and empty cells are shown as transparent.

Each cell 502 in a 3D occupancy field 500 contains Boolean information, which, for instance, may be set to true if the cell contains hair and may be set to false otherwise. A 3D occupancy field is attached to a 3D orientation field. The same 3D grid is used to define the geometry of the 3D orientation field and the geometry of the 3D occupancy field.

To meet the requirements of a strand-based model, the application discusses a representation format based on a 3D occupancy field and an associated 3D orientation field. This format provides a compact representation of the hairstyle model. This format also avoids the ambiguities in the reconstruction of a full strand model that may result from the sparse strand sampling of guide curve models. The reconstruction may be achieved by sampling strand roots on the surface of the avatar scalp inside the cells marked as occupied and growing strands from these roots following the directions specified by the cells of the 3D orientation field. For some embodiments, some diversity may be introduced in the shapes and colors of the strands inside a 3D cell to make the reconstructed hairstyle more realistic.

Unlike guide-curve based models, volumetric hairstyle representations provide a regular sampling of the strand directions in 3D space. Such representations ensure that the strand growing directions are always unambiguously specified inside the whole hairstyle volume. The density of the 3D grid underlying the representation may be adapted to the desired tradeoff between realism of the hairstyle and compacity of its representation model.

### Guide Curve-Based Hairstyle Models

The following detailed presentation of the hairstyle representation that is the object of the application is compliant with the MPEG-I Scene Description format, but its meaning and use is generic. The representation may be encoded in any scene description format, such as XML, USD, or MPEG-I.

A hairstyle model relying on guide curves may be described by a "volumetricHairstyle" object. The properties of this object are listed in Table 1 and described below.

A hairstyle may be given a name that may be specified using the "name" property of a "volumetricHairstyle" object.

The hairstyle model is specified as a 3D orientation and a 3D occupancy field defined within a 3D bounding box. By default, this bounding box is axis-aligned. It is described by the "box" property of "volumetricHairstyle". "box" is an instance of the "boundingBox" type described in Table 2. It holds a "center" property that specifies the X, Y, Z coordinates of the bounding box center in the 3D coordinate system in which the scene including the avatar is described, and a "size" property that defines the dimensions of the bounding box along the X, Y, Z axes of this coordinate system.

The 3D bounding box is split along the X, Y, Z axes into regularly sampled cells of constant size, forming a 3D grid. The "numCells" property of "volumetricHairstyle" specifies the numbers *(nx, ny, nz)* of cells along the X, Y, Z axes, respectively. The total number of cells in the grid is thus *nx* * *ny * nz.* The overall spatial extent of the grid through the "box" property and the counts of its cells along each 3D dimension through the "numCells" property unambiguously define the geometry of the grid.

For some embodiments, the axis-aligned bounding box described by the "box" property may be rotated to better fit the volume occupied by the hairstyle in 3D space. In line with the gITF specification, this 3D rotation is described by the "gridRotation" property of "volumetricHairstyle" as a set of 4 *(x, y,* z, *w)* unit quaternion parameters.

**Table 1.**

| **Name** | **Type** | **Required** | **Description** |
|---|---|---|---|
| name | string | No | Name of the hairstyle. |
| box | bounding Box | Yes | Axis-aligned 3D Box defining a bounding volume for the hairstyle. It is described as a "boundingBox" object whose specification is provided in Table 2. |
| numCells | Number[3] | Yes | Numbers of cells *(nx, ny, nz)* in the X, Y and Z directions, in that order, of the 3D grid holding the orientation and occupancy field representation of the hairstyle. The 3D extent of this grid is defined by the "boundingBox" property. |
| gridRotation | Number[4] | No | 3D rotation to be applied to the axis-aligned "boundingBox" to define the hairstyle bounding volume. The rotation is defined as a unit quaternion *(x, y, z, w).* |
| isSparse | Boolean | No | If set to TRUE, the buffer pointed to by the "orientationField" accessor holds values only for grid cells signaled as non-empty by "occupancyField". Default is false. |
| occupancyField | integer | Yes | Index of the accessor pointing to the buffer that holds the occupancy field data for the cells of the 3D grid defined by "boundingBox" and "numceCells". The data consist of *nx* * *ny* * *nz* unsigned byte SCALAR values. |
| orientationField | integer | Yes | Index of the accessor pointing to the buffer that holds the orientation field data for the cells of the 3D grid defined by "boundingBox" and "numCells", and optionally "gridRotation". |

Table 2 provides descriptions of the elements corresponding to a "boundingBox" object.

**Table 2.**

| **Name** | **Type** | **Required** | **Description** |
|---|---|---|---|
| center | Number[3] | Yes | Coordinates of the center of the 3D box in the 3D world coordinate system where the scene containing the avatar and its hairstyle is represented. |
| size | Number[3] | Yes | Dimensions of the box along the (X, Y, Z) axes of the world coordinate system where the scene containing the avatar and its hairstyle is represented. |

The 3D occupancy field of the volumetric hairstyle model is specified by the "occupancyField" property of "volumetricHairstyle" as the index of an accessor in the "accessors" array of the scene description. This accessor points to a buffer that holds the occupancy values for each cell of the 3D grid described by "box" and "numCells". Each value is a Boolean encoded as an unsigned byte, for example, with the convention that the value is false if the unsigned byte is zero and true otherwise. The value of an occupancy field cell may be set to true to signal that the cell contains a part of the hairstyle and set to false otherwise. For some embodiments, the opposite convention may be used. The occupancy field cell values are stored in the buffer referenced by the "volumetricHairstyle" accessor as a 1D flattened version of the 3D array representing the occupancy values in the grid cells. To obtain this flattened version, the cells of the grid may be ordered starting with the cell with the lowest X, Y, Z coordinates in the axis-aligned grid, then proceeding with increasing cell coordinates along the Z axis for each pair of (X,Y) coordinates, and for each such pair, proceeding with increasing cell coordinates along the *Y* axis.

To illustrate this flattened representation, assume each grid cell is represented by its indexes along the X, Y, Z axes as an *(i_{X}, i_{Y}, i_{Z})* triplet, and the grid has 2 cells along each of the X, Y, and Z dimensions. The flattened 1D array stored in the buffer pointed to by the "occupancyField" property, which holds the occupancy values for grid cells (0,0,0), (0,0,1), (0,1,0), (0,1,1), (1,0,0), (1,0,1), (1,1,0), (1,1,1), in that order (binary counting order).

Similarly, the 3D orientation vectors defining the geometry of the hairstyle are specified through the "orientationField" property of "volumetricHairstyle" as the index of an accessor. The buffer referenced by this accessor holds a 1D flattened version of the 3D array representing the orientation values in the grid cells. The flattening scheme is the same as the one used for "occupancyField". Each orientation value in a grid cell of "orientationField" represents the direction of strands within this cell. Each orientation value is a 3-dimensional VEC3 vector of float components. The "orientationField" values of grid cells that are signaled as empty by "occupancyField" may be ignored and may be set to any VEC3 instance.

When the "isSparse" property is set to true, the "orientationField" values of grid cells that are not occupied (which corresponds to when a value in "occupancyField" is false) are not encoded. For this scenario, the buffer pointer to by "orientationField" may hold fewer than (*n_{x *} n*_{*y* *} *n_{z})* float VEC3 values, where *nₓ, n_{y},* and *n_{z}* are the dimensions of the grid. The decoder parses "occupancyField" prior to "orientationField" in order to determine to which non-empty cell each "orientationField" value maps.

### Alternative embodiments

For some embodiments, the "occupancyField" and "orientationField" properties of "volumetricHairstyle" are specified as arrays of unsigned byte and VEC3 vectors of float components, respectively, instead of accessor indices. These two arrays have the same content as the buffers referenced by the accessors described above.

For some embodiments, the orientation field data are represented as unit 3D vectors. Accordingly, the data encoded in the "orientationField" property consist of *nx* * *ny* * *nz* VEC2 values representing the first two components of the orientation field vectors. The third component of each orientation field 3D vector is derived from the constraint that the norm of the vector equals 1.

For some embodiments, the "occupancyField" and "orientationField" properties described above are replaced by a single "volumetricField" property that jointly encodes the occupation and the orientation data for each cell. The description of "volumetricfield" is similar to "orientationField" except that each cell consists of a 4-dimensional VEC4 vector of float components. Three components of the vector represent the direction of strands within the cell as in "orientationField", the fourth component encodes the occupancy in the cell using some convention. For instance, a convention may be that a value of 0.0 indicates an empty cell and any other value indicates an occupied cell, or that a negative value indicates an empty cell, and a positive value indicates an occupied cell.

For some embodiments, the "occupancyField" and "orientationField" properties described above are represented by a glTF mesh with a single point cloud primitive. Following the gITF specification, the "mode" property of this primitive should be accordingly set to POINTS. Each point in this point cloud represents the center of a cell of the 3D occupancy and orientation fields. Thus, the points must be positioned to form a regularly sampled 3D grid in 3D space. The positions of the points are specified through the "POSITION" attribute of the primitive. The occupancy and orientation fields are each represented as an attribute of the gITF point cloud primitive. These two attributes may be named, for instance, "OCCUPANCY" and "ORIENTATION". They are indexes of accessors and have the same semantics as the "occupancyField" and "orientationField" properties of "volumetricHairstyle" described above. For some embodiments, the positions of the grid cell centers are determined by the "POSITION" attribute of the point cloud primitive, the dimensions of each cell are determined by the distance between neighboring points along the X, Y, Z axes of 3D space, and the extent of the grid is determined by the positions of the outermost cell centers and the cell dimensions. Hence, the "box" and "numCells" properties specified above are no longer needed and are removed.

The Avatar Json Interchange Format (AJIF) description format for avatar assets was presented in the '094 application. In some embodiments, the AJIF description is enriched with a description of the avatar hairstyle as a volumetric representation. This enrichment amounts to appending a "volumetricHairstyle" property to the "Geometry" element of the "geometries" list in the AJIF content that describes the part of the avatar mesh containing the scalp. Table 3 shows an updated definition of the AJIF "Geometry" object for some embodiments.

The description of the "volumetricHairstyle" property for AJIF is similar to the description provided in Table 1. The difference is that the "occupationField" and "orientationField" integers represent the index of a "RawData" item in the "data" collection instead of a glTF accessor index.

**Table 3.**

| **Name** | **Type** | **Required** | **Description** |
|---|---|---|---|
| name | string | No | Geometry name. |
| vertices | integer | Yes | References an item in the "data" collection. The referenced item must be a float tensor [number of vertices, 3]. |
| normals | integer | No | References an item in the "data" collection. The referenced item must be a float tensor [number of vertices, 3]. |
| uvs | integer [1-*] | No | List of references to an item the "data" collection. The i-th referenced item must be a float tensor [number of uvs(i), 2]. |
| faces | Faces | No | A Faces object. |
| blendshapes | Blendshape [1-*] | No | List of *Blendshape.* |
| textures | Texture [1-*] | No | List of *Texture.* |
| hairstyle | volumetricHairstyle | No | Representation of the avatar hairstyle as a volumetric hairstyle. |

### Example MPEG-I SD Description

The example scene description in MPEG-I SD format below describes the properties of a hairstyle represented using a 3D orientation field and a 3D occupancy field, as specified above.

The described example scene contains a single root node named "my_avatar" that represents the model of an avatar. Accordingly, the node is extended by the "MPEG_node_avatar" extension. The avatar node includes a "mesh", named "my_avatar_mesh" and referenced by index 0 in the "meshes" array. The "MPEG_node_avatar" extension includes a hairstyle model described by the "hairstyle" property.

The hairstyle model described by the by the "hairstyle" property is, according to the application, a "volumetricHairstyle" object specifying a 3D occupancy field and a 3D orientation field sampled on a regular 3D grid. In the example description it is instantiated as the "hairstyle" property of the "MPEG _node _avatar" extension and named "my_avatar_hairstyle". The bounding volume of the grid is described by the "box" property, which is a "boundingBox" object as specified in Table 2. This object contains a "center" property that defines the bounding box center and a "size" property that defines its extent in 3D space. Since the optional "gridRotation" property of the hairstyle description is omitted, the bounding volume of the grid is axis-aligned with the coordinate system in which the scene is represented. The "isSparse" property is not specified. Thus, its value defaults to "false" and "occupationField" and "orientationField" data are encoded for all cells represented in the 3D grid.

The "occupancyField" and "orientationField" properties refer to the accessors indexed by 3 and 4, respectively, in the "accessors" array of the scene description. The buffers referenced by these accessors contain the occupancy and 3D orientation data for each cell of the grid, as described earlier. For clarity, the content of the accessors is not exposed in the scene description.

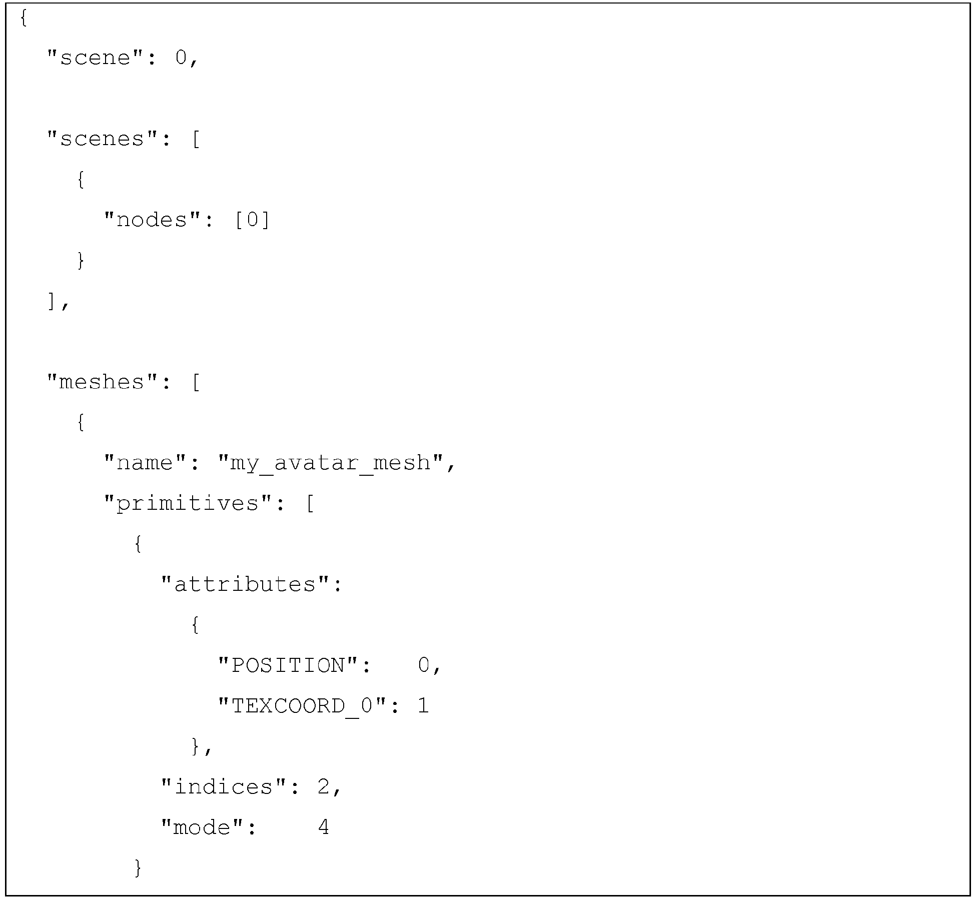

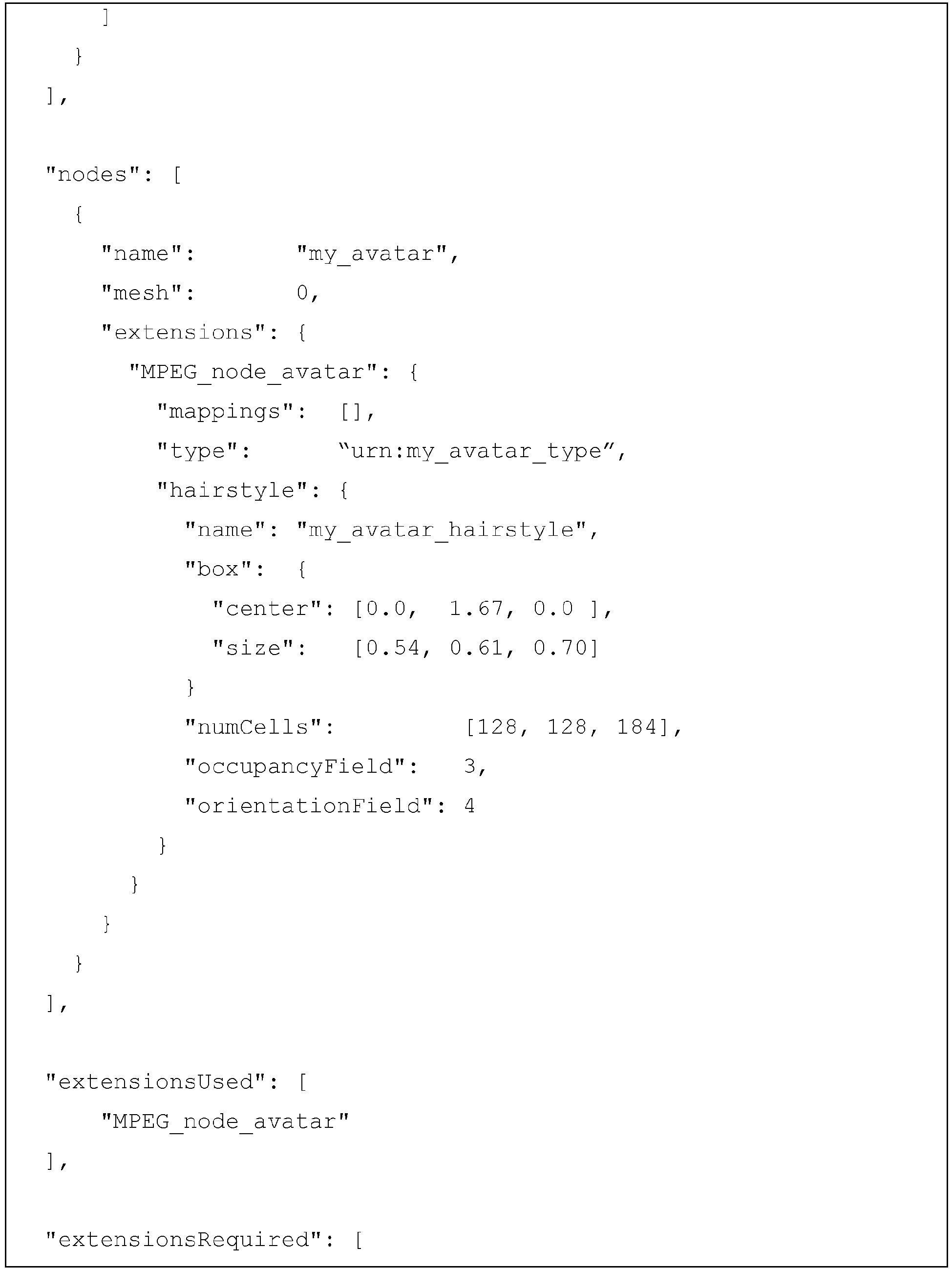

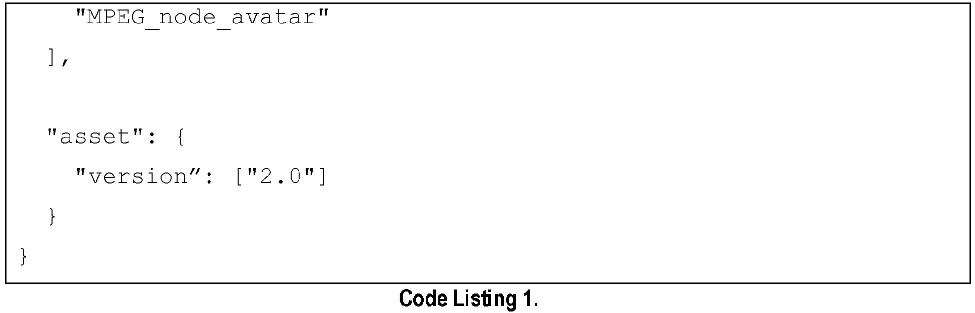

### Parsing of the "volumetricHairstyle" Property

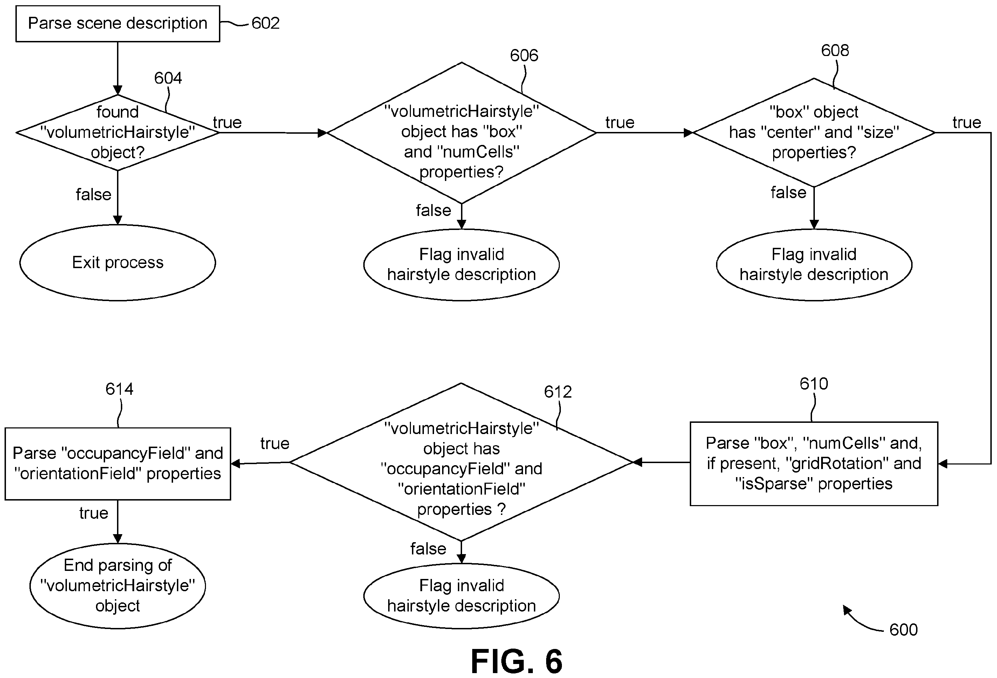

FIG. 6 is a flowchart illustrating an example process for parsing the "volumetricHairstyle" property according to some embodiments. For some embodiments, a scene description containing a "volumetricHairstyle" object may be parsed according to the example process 600 shown in FIG. 6.

First, at step 602, the scene description is parsed. At step 604, instances of the "volumetricHairstyle" property are detected in the scene description. If no such instance is found, the process 600 exits.

If at least one "volumetricHairstyle" object is found, the parsing proceeds to step 606. At box 606, the process 600 checks to see if the "volumetricHairstyle" object has a "box" property and a "numCells" property. If the "volumetricHairstyle" object does not have a "box" property and a "numCells" property, the description of the "volumetricHairstyle" object is flagged as invalid. Otherwise, the process 600 continues to step 608.

At step 608, the process 600 checks to see if the "box" object detected at step 608 has a "center" and a "size" property. If the "box" object detected at step 608 does not have a "center" and a "size" property, the description of the "volumetricHairstyle" object is flagged as invalid. Otherwise, the process 600 continues to step 610.

At step 610, the "box" and "numCells" properties and, if present, the "gridRotation" and "isSparse" properties, of the "volumetricHairstyle" object are parsed. For some embodiments, the gridRotation" and "isSparse" properties are not used.

The process 600 proceeds to step 612. At step 612, the process 600 checks to see if the "volumetricHairstyle" object has "occupancyField" and "orientationField" properties. If the "volumetricHairstyle" object does not have "occupancyField" and "orientationField" properties, the description of the "volumetricHairstyle" object is flagged as invalid. Otherwise, process 600 continues to step 614.

At step 614, the process 600 parses the "occupancyField" and "orientationField" properties and the process of parsing the "volumetricHairstyle" object ends.

### Processing Model

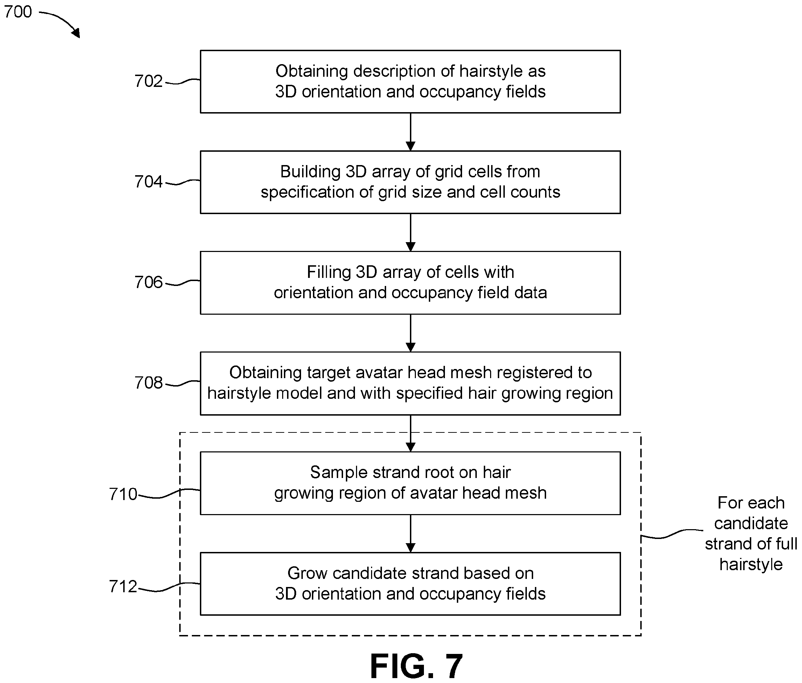

FIG. 7 is a flowchart illustrating an example process for synthesizing a full strand hairstyle from a volumetric hairstyle according to some embodiments. FIG. 7 shows an example process 700 for how a hairstyle as described herein is used to reconstruct a full strand-based hairstyle model by growing strands on the surface of an avatar head mesh.

For some embodiments, this avatar head mesh is provided separately from the hairstyle model representation and is registered to the hairstyle model, so that the position, scale, and rotation of the hairstyle model and the avatar head mesh are consistent. For some embodiments, a hair growing region is specified on the avatar head mesh, for instance by labeling the head mesh faces.

The processing starts at step 702, where the device in charge of reconstructing the full strand-based hairstyle receives the hairstyle description. This description, according to the application, holds a 3D orientation field and a 3D occupancy field, each sampled on a regular 3D grid of cells whose geometry is specified in the hairstyle description.

At step 704, the device builds a 3D array of grid cells from the specification of the extent of the grid along the X, Y, Z axes of 3D space and the number of grid cells along each axis.

At step 706, the device assigns an occupancy Boolean and a 3D orientation vector to each of the grid cells determined at step 704. This involves unflattening the 1D array of Boolean occupancy values and the 1D array of hair orientation vectors provided in the hairstyle description obtained at step 702. The assignment of the 3D orientation values to the grid cells depends on the value of the "isSparse" property of the description.

At step 708, the device obtains a description of the avatar head mesh on which the strands of the full hairstyle model are to be grown. For some embodiments, this avatar head mesh is registered to the hairstyle model obtained at step 702. For some embodiments, an indication of the hair growing region is provided on the head mesh, for instance with labels for each polygonal face of the mesh indicating whether hair strands may be grown from the face or not.

At step 710, for each strand of the full hairstyle to be reconstructed, a strand root is sampled on the hair growing region of the avatar head mesh obtained at step 708. The count and locations of the roots are independent of the description of the hairstyle obtained at step 702.

At step 712, for each of the strand roots determined at step 710, a strand is grown based on the 3D occupancy and orientation fields obtained at step 702. The initial growing direction of the strand is determined by the 3D vector of the orientation field cell into which the strand root falls. When the grown strand reaches the border of a cell and moves to another cell, the strand growing direction becomes the 3D orientation field vector for the new cell. If this new cell is marked as unoccupied by the 3D occupancy field, the growing process for the considered strand ends.

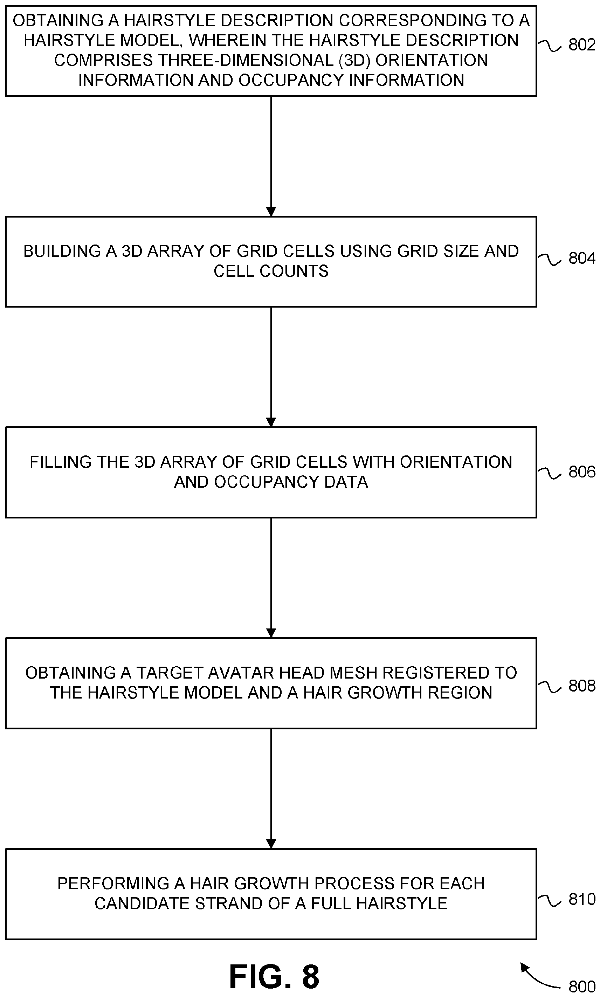

FIG. 8 is a flowchart illustrating an example process for growing a hairstyle according to some embodiments. For some embodiments, an example process 800 may include obtaining 802 a hairstyle description corresponding to a hairstyle model, wherein the hairstyle description comprises three-dimensional (3D) orientation information and occupancy information. For some embodiments, the example process 800 may further include building 804 a 3D array of grid cells using grid size and cell counts. For some embodiments, the example process 800 may further include filling 806 the 3D array of grid cells with orientation and occupancy data. For some embodiments, the example process 800 may further include obtaining 808 a target avatar head mesh registered to the hairstyle model and a hair growth region. For some embodiments, the example process 800 may further include performing 810 a hair growth process for each candidate strand of a full hairstyle.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a hairstyle description corresponding to a hairstyle model, wherein the hairstyle description includes three-dimensional (3D) orientation information and occupancy information; building a 3D array of grid cells using grid size and cell counts; filling the 3D array of grid cells with orientation and occupancy data; obtaining a target avatar head mesh registered to the hairstyle model and a hair growth region; and performing a hair growth process for each candidate strand of a full hairstyle.

For some embodiments of the example method, the hair growth process includes: sampling a strand root on the hair growth region of the target avatar head mesh; and growing the respective candidate strand based on the 3D orientation information and the occupancy information in the hairstyle description.

For some embodiments of the example method, growing the respective candidate strand is based on the 3D orientation information and the occupancy information corresponding to a first grid cell.

For some embodiments of the example method, growing the respective candidate strand includes: determining that the respective candidate strand has reached a border of the first grid cell and a second grid cell; and growing the respective candidate strand based on the 3D orientation information and the occupancy information of the second grid cell.

For some embodiments of the example method, wherein the occupancy information corresponding to the respective candidate strand indicates that a corresponding grid cell is unoccupied, and wherein the hair growth process further includes stopping growth of the respective candidate strand.

For some embodiments of the example method, filling the 3D array of grid cells with orientation and occupancy data is based on the 3D orientation information and occupancy information in the hairstyle description.

For some embodiments of the example method, filling the 3D array of grid cells with orientation and occupancy data includes: assigning a 3D orientation value to at least one cell in the 3D array of grid cells. assigning an occupancy Boolean value to at least one cell of the 3D array of grid cells; and

For some embodiments of the example method, assigning the 3D orientation vector to at least one cell in the 3D array of grid cells includes: obtaining a 1-dimensional (1D) array of hair orientation vectors from the hairstyle description; obtaining an isSparse property value from the hairstyle description; unflattening the 1D array of hair orientation vectors; and assigning a 3D orientation value to at least one cell in the 3D array of cells based on the unflattened 1D array of hair orientation vectors and the isSparse property.

For some embodiments of the example method, the 3D orientation value corresponds to a 3D orientation vector.

For some embodiments of the example method, assigning the occupancy Boolean value to at least one cell of the 3D array of grid cells includes: obtaining a 1-dimensional (1D) array of Boolean occupancy values from the hairstyle description; unflattening the 1D array of Boolean occupancy values; and assigning an occupancy Boolean value to at least one cell in the 3D array of cells according to the unflattened 1D array of Boolean occupancy values.

For some embodiments of the example method, the target avatar head mesh includes an indication of the hair growth region.

For some embodiments of the example method, the target avatar head mesh includes an indication of whether hair strands may be grown from a portion of the hair growth region.

For some embodiments of the example method, the hairstyle description is compatible with an Avatar Json Interchange Format (AJIF)-based format.

For some embodiments of the example method, the hairstyle description is compatible with a Graphics Library Transmission Format (gITF)-based format.

An example apparatus in accordance with some embodiments may include: a processor; and a non-transitory computer-readable medium storing instructions operative, when executed by the processor, to cause the apparatus to perform the method of any of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining a hairstyle description corresponding to a hairstyle model,
wherein the hairstyle description comprises three-dimensional (3D) orientation information and occupancy information;
building a 3D array of grid cells using grid size and cell counts;
filling the 3D array of grid cells with orientation and occupancy data;
obtaining a target avatar head mesh registered to the hairstyle model and a hair growth region; and
performing a hair growth process for each candidate strand of a full hairstyle.

2. The method of claim 1, wherein the hair growth process comprises:
sampling a strand root on the hair growth region of the target avatar head mesh; and
growing the respective candidate strand based on the 3D orientation information and the occupancy information in the hairstyle description.

3. The method of claim 2, wherein growing the respective candidate strand is based on the 3D orientation information and the occupancy information corresponding to a first grid cell.

4. The method of claim 3, wherein growing the respective candidate strand comprises:
determining that the respective candidate strand has reached a border of the first grid cell and a second grid cell; and
growing the respective candidate strand based on the 3D orientation information and the occupancy information of the second grid cell.

5. The method of any one of claims 1-4,
wherein the occupancy information corresponding to the respective candidate strand indicates that a corresponding grid cell is unoccupied, and
wherein the hair growth process further comprises stopping growth of the respective candidate strand.

6. The method of any one of claims 1-5, wherein filling the 3D array of grid cells with orientation and occupancy data is based on the 3D orientation information and occupancy information in the hairstyle description.

7. The method of any one of claims 1-6, wherein filling the 3D array of grid cells with orientation and occupancy data comprises:
assigning a 3D orientation value to at least one cell in the 3D array of grid cells; and
assigning an occupancy Boolean value to at least one cell of the 3D array of grid cells.

8. The method of claim 7, wherein assigning the 3D orientation value to at least one cell in the 3D array of grid cells comprises:
obtaining a 1-dimensional (1D) array of hair orientation vectors from the hairstyle description;
obtaining an isSparse property value from the hairstyle description;
unflattening the 1D array of hair orientation vectors; and
assigning a 3D orientation value to at least one cell in the 3D array of cells based on the unflattened 1D array of hair orientation vectors and the isSparse property.

9. The method of any one of claims 7-8, wherein the 3D orientation value corresponds to a 3D orientation vector.

10. The method of claim 7, wherein assigning the occupancy Boolean value to at least one cell of the 3D array of grid cells comprises:
obtaining a 1-dimensional (1D) array of Boolean occupancy values from the hairstyle description;
unflattening the 1D array of Boolean occupancy values; and
assigning an occupancy Boolean value to at least one cell in the 3D array of cells according to the unflattened 1D array of Boolean occupancy values.

11. The method of any one of claims 1-10, wherein the target avatar head mesh comprises an indication of the hair growth region.

12. The method of any one of claims 1-11, wherein the target avatar head mesh comprises an indication of whether hair strands may be grown from a portion of the hair growth region.

13. The method of any one of claims 1-12, wherein the hairstyle description is compatible with an Avatar Json Interchange Format (AJIF)-based format.

14. The method of any one of claims 1-12, wherein the hairstyle description is compatible with a Graphics Library Transmission Format (gITF)-based format.

15. An apparatus comprising:
a processor; and
a non-transitory computer-readable medium storing instructions operative, when executed by the processor, to cause the apparatus to perform the method of any one of claims 1 through 14.
